# EUROPEAN PATENT SPECIFICATION

(11) **EP 1 842 428 B1**
(45) Date of publication and mention of the grant of the patent: **25.11.2009**
(21) Application number: 06405139.4
(22) Date of filing: 04.04.2006
(51) Int. Cl.: A22C 17/10

(54) **Electronic and/or visual identifier to ensure traceability in the food industry**
Elektronischer und/oder visueller Kennzeichner zum Gewährleisten der Rückverfolgbarkeit in der Lebensmittelindustrie
Identificateur électronique et/ou visuel pour garantir la traçabilité dans l'industrie alimentaire

(43) Date of publication of application: 10.10.2007
(73) Proprietor: Seidic S.A., 6934 Bioggio (CH)
(72) Inventor: Oggian, Sileno, 6992 Cimo (CH); Malfanti, Roberto, 6968 Sonvico (CH)
(74) Representative: Fiammenghi-Domenighetti, Delfina

(56) References cited:
- EP-A- 0 320 212
- US-A- 1 830 936
- US-B1- 6 328 516
- US-B1- 6 545 604

## Description

The present invention relates to an identifier as defined in the precharacterizing clause of Claim 1.

This identifier is used for the identification, which may be electronic and/or visual, of products, particularly food products such as those derived from butchering, containers and sacks for animal feed.

In the field of butchering, identification systems implemented by the application of labels, seals, branding and tattooing have been known for several decades. With the advent of computerization, there has been a desire to implement systems which would enable the identity code to be acquired in a more direct way, such as labels with bar codes printed on paper or plastic substrates.
Recent European legislation (EC Regulation 178/2002, Articles 3 and clauses 15 and 18, clauses 1 to 5) includes a requirement for the operation of a traceability system. This extends to all food, animal feed and animals intended for food production, including all substances intended to be incorporated in food in the course of production, processing and distribution. The concept of traceability and the responsibilities for implementing it are described in the cited Regulation. However, the practical procedures for labelling have not been established precisely, and operators in the food industry are therefore left free to choose the method to be adopted.

The prior art is represented by systems which are simply provided with progressive numbering or with special identification required by the user himself for his own convenience or needs.

Known systems generally include forms of fixing of the dart type, designed to be driven into the product by percussion. The means of application are normally compressed-air guns or simply mallets. They are difficult to extract, because of the characteristic projections (barbs) of the dart or the length of the penetrating part after application.

US Patent 6,545,604 describes an electronic identification device, having a form of fixing of the spike (pointed bar) type. The extraction of this identifier is difficult because of the length of the penetrating part after application. If the identifier takes the form of a pointed bar (spike), penetration is facilitated, but the fixing becomes less secure.

US-1830936 discloses a club shaft having a blind bore in its handle end, a plug in the bore and a monogram cap provided with a screw adapted to be threaded into said bore against the resistance of the plug.

EP-320212 discloses an identification marker system includes a disc like body portion with a cylindrical anchor means formed on the bottom surface of the body member. An enlarged conical head formed on the bottom of the cylindrical anchor member is forced through a hole in a resilient member to snugly fit the anchor member within the hole. A protective collar is formed on the top surface of the body member and identification are engraved within the space on the top surface of the body member that is protected by the annular collar.

US-6328516 discloses a screw having a shank portion provided with a thread and passing over via a transition into a conical tip. One or more parallel fins are provided at least in the area of the tip. They are formed with cutting edges and preferably disposed at an angle of inclination of no less than 5° with respect to the longitudinal axis of the screw. The fins project beyond the core diameter of the shank portion. The conical tip includes a finless end portion. The thread extends across the full length of the tip.

The shape of the fixing device, and more particularly of the portion intended to penetrate into the product, influences the choice of the area to which it is applied. Typically an identifier in the form of a dart or spike can perforate medium to soft tissues, such as muscle or hide, provided that they have sufficient solidity to generate a reaction to the percussion, thus allowing them to be perforated.

A drawback of this type of identifier (with the dart or spike configuration) lies in the impossibility of applying it to medium to hard tissues. The mechanical strength of the plastic body would be adversely affected by the very large force generated by the percussion. This results in the fracture of the point or failed penetration due to the backward movement of the tissues. Positioning on a rigid support would therefore be necessary, impeding the movement of the product to be identified. In any case, if the product to be identified is deformed, the fixing could become unstable, the consequences of which can easily be imagined.

The object of the invention is to overcome the aforesaid drawbacks and to provide an identifier with a form of fixing which provides the maximum ease of application and the maximum security of retention.

This object is achieved by the characteristics defined in Claim 1.
An advantage of the invention lies in the fact that the application of the identifier requires less force on site and that the fixing to the product to be identified is stable and secure. It also makes it possible to have a wide range of areas of the product suitable for application.

Advantageous developments of the identifier proposed by the present invention are described in the dependent claims.

The further advantages yielded by the present invention are principally as follows.
- Application to non-consumable areas of meat products and/or to medium to hard tissues such as hide, cartilage, connective tissue of muscles and joint sinews which are not normally consumed, thus avoiding damage to valuable parts of the product.
- The operation of applying the identifier is considerably facilitated even without the provision of a rigid support for the product (in the case of suspended loads, soft bags and deformable objects or bodies). Application is also possible on swinging suspended products typically found in butchering, or to products packaged in bags.
- Facilitated identification of unstructured products which do not have sufficient impact resistance and which are therefore difficult to perforate.
- Less dangerous for operators, because of the absence of sudden movements by the application device, which are inevitably present in percussion systems. These frequently cause injury to operators' limbs or damage to the product. The accident prevention systems required at workstations are therefore considerably simplified.
- Impossibility of penetration by agents which might damage the product, such as spores of moulds or fungi. The "sealing" effect which is created between the outer surface of the tissue and the shank of the screw also serves to limit the leakage of fluids such as blood or other organic liquids.
- Impossibility of removing the identifier by rotation in the opposite direction (unscrewing).
- Production of the identifiers entirely from plastics materials according to the specifications for food use, and absence of metal points subject to oxidation which might damage the identified products or affect their quality.
- A very wide range of colour options for easy visual identification of the identifier.
- Application also possible to animal feed packages consisting of card, thick paper sacks, jute and reinforced fabrics.

The invention will now be described more fully with reference to the attached drawings which show schematically a preferred practical embodiment, described solely by way of example and without restrictive intent, since technical or constructional changes can be made at any time without departure from the scope of the present invention.

In the said drawings,
Figure 1 shows a preferred embodiment of the identifier proposed by the present invention;
Figure 2 shows a view from below of the embodiment of Figure 1;
Figure 3 shows a detail of Figure 2;
Figure 4 shows a front view of the embodiment as in Figure 1;
and Figure 5 shows a detail of Figure 4, seen from above.

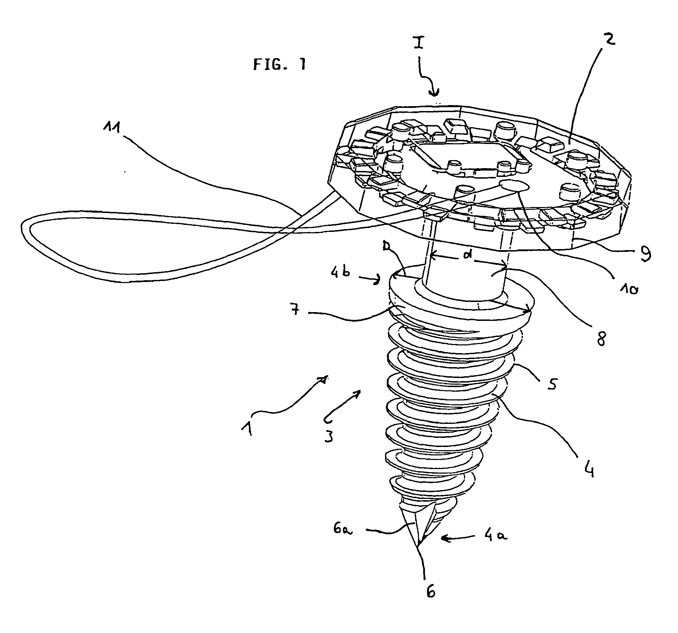

Figure 1 represents an identifier according to a preferred embodiment. It shows a body 1 comprising principally an upper part 2 and a lower part 3 which are in contact with each other. The body 1 can receive at least one means for the identification I of a product. The said identification means I can consist of an electronic device and/or a visual device. The electronic device can be incorporated in the body 1, which has a plastic fixing system in the form of a self-tapping one-way screw. The electronic device can be, for example, an RFID (Radio Frequency Identification Device) system.
Clearly, other types of identification means I can be applied to the body 1 without departure from the scope of the present invention.
The upper part of the body or head 2 has an anti-rotation profile comprising angles 9. In the illustrated embodiment, the head 2 is in the shape of a dodecagon, but could also be in other shapes, for example hexagonal, octagonal, etc. This type of shape of the head 2 enables it to interact with suitable application devices or means (not shown), for example electrical or pneumatic screwdrivers, for driving and/or rotating the head 2 and consequently the body 1. Thus there is a very considerable reduction in the danger to which the operators are subject, owing to the absence of sudden movements by the application device, whereas these movements are inevitably present in the prior art percussion systems. The latter frequently cause injury to operators' limbs or damage to the product. The accident prevention systems required at workstations are therefore considerably simplified when the identifiers according to the present invention are used.

The lower part of the body 1 has a fixing shank 3 with a profile in the form of a self-tapping screw. A thread 4 is present in the terminal part of the said fixing shank 3. The said thread 4 has lateral projecting cutting parts 5 and at its end 4 farthest from the head 2 has a point 6 with suitable cutting edges 6a. The lateral projecting parts of the piercing thread 4 extend in helical or spiral form. The piercing thread 4 has a conical form in which the end 4b with the greater diameter is the end closer to the head 2, while the point 6 is at the opposite end 4a.
During the application of the identifier to the product to be identified, the part with the screw profile 4 intended to penetrate the product separates the tissues during the penetration, because of its distinctive conical shape. The tissues are pierced in the initial stage by the point 6 having the said suitable cutting edges 6a, the cutting angle of which can be adapted perfectly to the typical consistency of the tissues found in different types of product to be identified. The pressure required to penetrate the tissues, even when these have a considerable density, is very much lower than that which has to be exerted in the dart configuration of the prior art. Furthermore, when the tissues have been pierced they are screwed along the thread, pulling the product to be identified towards the operator, thus considerably facilitating this operation, even without a rigid support for the product (in the case of suspended loads, soft bags and deformable objects or bodies).

The part of the said fixing shank 3 connected to the head 2 has a portion of cylindrical shape 8 having a diameter d less than the diameter D of the thread 4 in its part 4b nearest the head 2. In other words, the fixing shank 3 terminates under the head 2 of the identifier in the said cylindrical portion 8 having a diameter d less than the diameter D of the terminal part of the thread. This enables the tissues, which have previously been separated and compressed, to return and tighten around the fixing shank 3. This prevents the opening, created for example in the rind of a ham, from remaining open. Penetration by agents which might damage the product, such as spores of moulds or fungi, is therefore prevented. The "sealing" effect which is created between the outer surface of the tissue and the shank of the screw 3 also serves to limit the leakage of fluids such as blood or other organic liquids.
The piercing thread 4 terminates in a closed way in a ring 7 so as to prevent the identifier from being removed by rotation in the anti-clockwise direction (unscrewed). The head 2 of the body 1 has a through hole 10. The said through hole 10 passes through the head 2 of the identifier and enables a seal on a cord to be additionally fitted to guarantee the non-removal from the product or any replacement of it.

A tie of plastics material 11, formed directly from the outer body of the identifier during moulding, provided with a terminal for permanent connection or connection by thermal deformation, can be passed into the same through hole 10 in order to prevent the product from being removed except by breaking. This guarantees the one-time use.

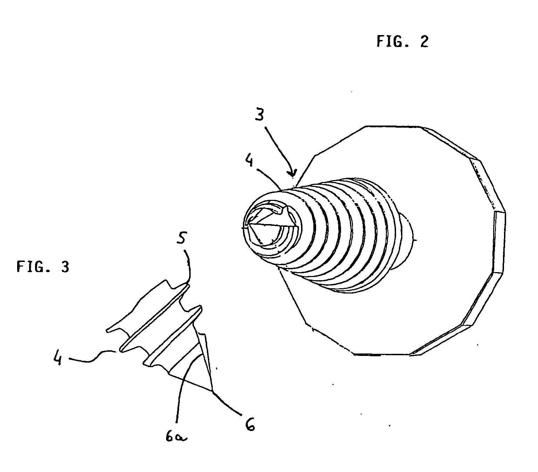

With reference to Figures 2 and 3, these show in a view from below the fixing shank 3 and a detail of the threaded part 4 of the body 1. In particular, the conical shape of the thread 4 with the cutting helical projections should be noted. The cutting parts 6a of the point 6 are also visible.

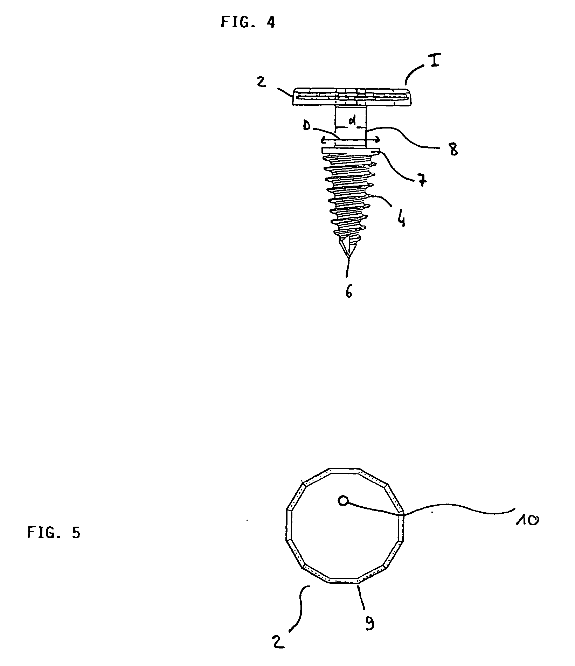

Figure 4 clearly shows the portion of the fixing shank 3 having a cylindrical shape 8 which extends from the lower part of the head 2 to the start of the thread 4, or more precisely to the ring 7.

Figure 5 is a view from above of the dodecagonal head 2, showing the through hole 10.

Visual identification can be provided by the differentiated marking or colouring of the identifier or part thereof, or by the application of visual devices such as labels or substrates containing information.

The said body 1 can be made completely or partially, for example only the fixing shank 3, from plastics material.
This makes it possible to form the identifiers from plastics materials according to specifications for food use, and ensures the absence of metal points subject to oxidation which might damage the identified products or affect their quality.

The present invention can be applied to electronic (RFID) and/or visual identification of food products such as those obtained from butchering, containers and bags for animal feed. The identifier proposed by the present invention can be applied to medium to hard tissues such as hide, cartilage, connective tissue of muscles and joint sinews which are not normally consumed, thus avoiding damage to valuable parts of the product.

Furthermore, cardboard packages for animal feed and jute or reinforced fabric bags for animal feed can be identified by the application of the identifier proposed by the present invention.

There is also a very wide range of colour options for easy visual identification of the identifier.

## Claims

1. Identifier to ensure the traceability of a product, particularly in the food industry, having a body (1) comprising at least one means for the identification (I) of the said product, the said body (1) having a head (2) and a fixing shank (3), whereby the fixing shank (3) has, at least partially, a piercing thread (4) having a shape such that it can penetrate into the product and become fixed to it, **characterized in that** said piercing thread (4) has a closed ring (7) at its end (4b) nearer to the said head (2).

2. Identifier according to Claim 1, **characterized in that** the said means for the identification (I) of the said product is an electronic and/or visual device.

3. Identifier according to one of the preceding claims, **characterized in that** the said piercing thread (4) has a screw profile of conical shape having cutting projecting parts (5) laterally and having a point (6) with suitable cutting edges (6a) at the end (4a) farthest from the said head (2).

4. Identifier according to one of the preceding claims, **characterized in that** between the said head (2) and the said piercing thread (4) the fixing shank (3) has a portion of cylindrical shape (8) having a diameter (d) smaller than the diameter (D) of the terminal part of the said piercing thread (4) nearer the said head (2).

5. Identifier according to one of the preceding claims, **characterized in that** the said body (1) is made entirely or partially from plastics material.

6. Identifier according to one of the preceding claims, **characterized in that** the said head (2) has a profile with angles (9), of hexagonal, octagonal or dodecagonal shape for example, in such a way as to interact with suitable application means.

7. Identifier according to one of the preceding claims, **characterized in that** the said head (2) has a through hole (10) for the application of a security seal.

## Patentansprüche

1. Kennzeichner zur Gewährleistung der Rückverfolgbarkeit eines Produkts, insbesondere in der Nahrungsmittelindustrie, mit einem Körper (1), der mindestens ein Mittel (I) zur Kennzeichnung des Produkts umfasst, wobei der Körper (1) einen Kopf (2) und einen Befestigungsschaft (3) aufweist, wobei der Befestigungsschaft (3) zumindest teilweise ein Schneidgewinde (4) mit einer solchen Form aufweist, dass er in das Produkt eindringen kann und daran befestigt wird, **dadurch gekennzeichnet, dass** das Schneidgewinde (4) an seinem Ende (4b) näher am Kopf (2) einen geschlossenen Ring (7) aufweist.

2. Kennzeichner nach Anspruch 1, **dadurch gekennzeichnet, dass** das Mittel (I) zur Kennzeichnung des Produkts eine elektronische und/oder visuelle Vorrichtung ist.

3. Kennzeichner nach einem der vorhergehenden Ansprüche, **dadurch gekennzeichnet, dass** das Schneidgewinde (4) ein Schraubprofil konischer Form mit seitlich vorragenden Schneidteilen (5) und mit einer Spitze (6) mit geeigneten Schneidkanten (6a) an dem sich am weitesten von dem Kopf (2) weg befindenden Ende (4a) aufweist.

4. Kennzeichner nach einem der vorhergehenden Ansprüche, **dadurch gekennzeichnet, dass** der Befestigungsschaft (3) zwischen dem Kopf (2) und dem Schneidgewinde (4) einen Teil (8) zylindrischer Form aufweist, dessen Durchmesser (d) kleiner ist als der Durchmesser (D) des Endteils des Schneidgewindes (4) näher am Kopf (2).

5. Kennzeichner nach einem der vorhergehenden Ansprüche, **dadurch gekennzeichnet, dass** der Körper (1) vollständig oder teilweise aus Kunststoffmaterial hergestellt ist.

6. Kennzeichner nach einem der vorhergehenden Ansprüche, **dadurch gekennzeichnet, dass** der Kopf (2) ein Profil mit Winkeln (9) von zum Beispiel sechseckiger, achteckiger oder zwölfeckiger Form aufweist, um mit geeigneten Anbringmitteln zusammenzuwirken.

7. Kennzeichner nach einem der vorhergehenden Ansprüche, **dadurch gekennzeichnet, dass** der Kopf (2) ein Durchgangsloch (10) für das Anbringen eines Sicherheitssiegels aufweist.

## Revendications

1. Identificateur permettant de garantir la traçabilité d'un produit, en particulier dans l'industrie alimentaire, ayant un corps (1) comprenant au moins un moyen pour l'identification (I) dudit produit, ledit corps (1) ayant une tête (2) et une tige de fixation (3), la tige de fixation (3) ayant, au moins en partie, un filetage perçant (4) ayant une forme telle qu'il puisse pénétrer dans le produit et s'y fixer, **caractérisé en ce que** ledit filetage perçant (4) a une bague fermée (7) à son extrémité (4b) plus proche de ladite tête (2).

2. Identificateur selon la revendication 1, **caractérisé en ce que** ledit moyen pour l'identification (I) dudit produit est un dispositif électronique et/ou visuel.

3. Identificateur selon l'une quelconque des revendications précédentes, **caractérisé en ce que** ledit filetage perçant (4) a un profil en forme de vis de forme conique ayant des parties saillantes coupantes (5) latéralement et ayant un point (6) avec des bords de coupe appropriés (6a) à l'extrémité (4a) la plus éloignée de ladite tête (2) .

4. Identificateur selon l'une quelconque des revendications précédentes, **caractérisé en ce qu'**entre ladite tête (2) et ledit filetage perçant (4), la tige de fixation (3) a une portion de forme cylindrique (8) ayant un diamètre (d) plus petit que le diamètre (D) de la partie terminale dudit filetage perçant (4) plus près de ladite tête (2).

5. Identificateur selon l'une quelconque des revendications précédentes, **caractérisé en ce que** ledit corps (1) est fabriqué entièrement ou en partie en matière plastique.

6. Identificateur selon l'une quelconque des revendications précédentes, **caractérisé en ce que** ladite tête (2) a un profil avec des angles (9) de forme hexagonale, octogonale ou dodécagonale, par exemple, de manière à interagir avec des moyens d'application appropriés.

7. Identificateur selon l'une quelconque des revendications précédentes, **caractérisé en ce que** ladite tête (2) a un trou traversant (10) pour l'application d'un sceau de sécurité.
